# EUROPEAN PATENT SPECIFICATION

(11) **EP 0 704 639 B1**
(45) Date of publication and mention of the grant of the patent: **15.12.1999**
(21) Application number: 95202097.2
(22) Date of filing: 01.08.1995
(51) Int. Cl.: F16D 66/02, B60T 17/22

(54) **Brake wear indicator**
Bremsverschleissanzeiger
Indicateur d'usure de frein

(30) Priority: 10.08.1994 GB 9416176
(43) Date of publication of application: 03.04.1996
(73) Proprietor: FEDERAL-MOGUL FRICTION PRODUCTS LIMITED, Manchester M3 2NL (GB)
(72) Inventor: Knott, Bryan Clifford, Chinley, Stockport, Cheshire, SK12 6DX (GB)
(74) Representative: Hammersley, John

(56) References cited:
- DE-A- 2 124 359
- DE-A- 2 248 927
- DE-A- 3 813 493
- FR-A- 2 260 723
- FR-A- 2 708 066
- GB-A- 2 089 915
- GB-A- 2 200 699
- US-A- 3 975 706

## Description

This invention relates to brake wear indication and in particular to providing such indication in relation to a vehicle for which visual inspection of each braked wheel assembly is normally performed as part of a maintenance or safety schedule.

The invention is particularly, but not exclusively, concerned with indicating brake wear in commercial vehicles of the type in which at least one braked wheel assembly includes a drum brake of the kind in which a lining of friction material is secured to a shoe platform by an array of rivets or the like and is replaced by a new lining when reduced in thickness to a predetermined allowable minimum by wear in contacting the drum during brake application.

It is known to provide an indication of brake wear by incorporating into the vehicle as it is built brake wear indicator apparatus which functions to indicate to the driver if the friction lining of any brake is worn to the minimum allowable thickness either when the brakes are applied or during normal driving. Such apparatus requires not only a wear sensor associated with a specific friction lining or linings but also wiring integrated into the wiring loom of the vehicle and a control unit and/or indicator means disposed in the cab for the convenience of the driver. An example of such apparatus is given by GB 2089915, DE 2124359 and US 3805228.

To make such apparatus useful to a driver who has many things to concentrate on simultaneously, and to make such apparatus more reliable, a fail safe approach is usually adopted wherein the wear indicator apparatus includes a complete circuit extending through the wear sensor associated with any friction lining, which circuit becomes ruptured or broken as a result of wear; that is, a change of state occurs in the sensor which enables a permanent indication to be provided for the driver to note not in the brief intervals when the brakes are actually applied but in the longer intervals between brake applications.

It will be appreciated that such apparatus and operating scheme is not readily suited to retro-fitting to existing vehicles for which it is not integrated into the vehicle design.

Other forms of brake wear monitoring transducers/equipment have been proposed which respond to operation of the parts of the braking system remote from the frictionally engaging surfaces within the brake itself, such equipment often working by monitoring the displacement of some brake actuating device or element, like a pedal, or actuating or adjustment rod or lever.

Equipment response to activity remote from the brake itself is described in DE-A-2248927, US-A-4757300, and GB-A-2200699. Such arrangements, which can work with exposed displaceable elements remote from the brake, require only proximity to the exposed elements and accordingly can work on a proximity switching basis and even be self-contained with no contact or connection to the components within the brake associated with the friction lining. However, whether integrated into the vehicle or not, they also direct their output at the vehicle driver.

For a large majority of vehicles, their maintenance regimes for both efficiency and safety comprises physical checks being made periodically by a mechanic (which term is used herein for a person having expertise in mechanical, including braking, apparatus rather than electrical apparatus) who checks many aspects of the vehicle structure, including its brakes, or possibly by a specialist brake technician, and it has been found in practice that such professionals are reluctant to become involved with the aforementioned indicator apparatus intended primarily for driver use, not least because it involves interacting with cab instrumentation as opposed to the item being checked and making use of apparatus which is intended to give indication under different circumstances, that is, when the vehicle is being driven as opposed to when the vehicle is parked for maintenance.

It is found also that reluctance of brake maintenance personnel to utilise and/or rely upon indications presented to the driver in the driver's cab, also extends to reluctance to rely upon such indications which are derived from external braking actuation elements remote from the friction lining of the brake.

Such physical brake maintenance schedule usually includes the brake-maintainer approaching each braked wheel (or at least those known to be at risk from accelerated brake wear) in turn and making a visual assessment of friction lining wear by way of an inspection hole in the brake back-plate secured to the wheel axle; any doubt as to the extent of wear, possibly caused by debris or other impairment of vision, requires the considerable effort of removing one or more wheels and brake drums to give complete access to the friction lining, even if it turns out to be unnecessary.

Thus, notwithstanding the existence of brake wear indicator apparatus for driver warning, there exists a requirement to assist such a physical brake/wheel inspection on vehicles without integrated wear indicator systems, or possibly separate from such integration systems where they do exist, which is for the benefit of, and under the control of, the mechanic making such physical inspection, and it is an object of the present invention to provide a method of indicating a particular extent of brake wear, and apparatus therefor of simple construction, employable with such physical inspection routine.

According the a first aspect of the present invention brake wear indicator apparatus for indicating wear in a friction lining of a brake, associated with a vehicle wheel, which includes a metallic braking surface against which the friction lining is caused to bear upon brake application comprises a wear sensor having sensor conduction means (as herein defined) carried by the brake with the lining and arranged to approach said braking surface to a predetermined separation therefrom upon both wear of the lining to a predetermined level of thickness and application of the brake to effect a change in conduction characteristics of the sensor conduction means, a control unit comprising an indicator and control means responsive to a change of conduction characteristics of trigger conduction means associated therewith to cause operation of the indicator, and connecting conduction means extending from the sensor conduction means to said control unit and connecting said sensor conduction means to the control means as the trigger conduction means therefor, andis characterised in that the control unit comprises, a housing, carrying said indicator and control means and a power source for the arrangement, and means to mount the housing on the vehicle chassis in the vicinity of said wheel having said brake.

According to a second aspect of the present invention a method of determining wear of a brake friction lining associated with a wheel of a vehicle to a predetermined allowable limit of lining thickness, comprises disposing with respect to a said friction lining and a rotatable metal braking surface against which the lining is caused to bear by brake application, a wear sensor having sensor conduction means arranged to approach said braking surface to a predetermined separation therefrom upon both wear of the lining to said limit and application of the brake to effect a change in conduction characteristics of the sensor conduction means, disposing attached to the vehicle a control unit containing an indicator and control means arranged to operate the indicator in response to predetermined signal conduction characteristics of trigger conduction means connected thereto, and coupling said sensor conduction means of the wear sensor to said control means such that the sensor conduction means comprises said trigger conduction means and the wear sensor and control unit are disposed and coupled during normal vehicle operation and is characterised by disposing said control unit attached to the vehicle chassis in a housing containing said control means, indicator and a power supply therefor, and with the vehicle stationary, examining the indicator in the housing for an indication that the conduction characteristics of the sensor conduction means has changed due to said allowable limit of wear of the friction lining.

It is particularly convenient to dispose the control unit attached to the vehicle chassis in the vicinity of the wheel whose break wear is being determined and, with the vehicle stationary, to examine the indicator from a position adjacent the wheel, so that there is no risk of mis-identifying the wheel and being at the position to effect physical inspection or repair.

This represents a significant departure from methods and apparatus systems designed to alert the vehicle driver, either during driving or after the vehicle has stopped for a time, by utilising direct sensing of friction lining wear within the braked wheel in conjunction with a discrete and self-contained control unit proximate the site of the wheel for the benefit of the brake maintainer when the vehicle is not being driven.

Embodiments of the invention will now be described by way of example with reference to the accompanying drawings, in which:-
Figure 1 is a partly cut away view of a vehicle chassis illustrating an axle carried thereby and terminating in wheels containing conventional drum brakes and, additionally thereto, brake wear indicator apparatus in accordance with the present invention,
Figure 2 is a more schematic layout of the part of brake of Figure 1 and illustrating the general disposition and appearance of a brake sensor affixed with respect to the brake, control unit and connection between them of the wear indicator apparatus.,
Figure 3 is a sectional elevation through a portion of a brake shoe to which a friction lining is secured by way of a threaded fastening and the disposition of a first form of sensor with respect thereto,
Figure 4(a) is a schematic circuit diagram illustrating the components and conduction means of a first form within and between the wear sensor and control means and their functioning in respect of generating and processing signals,
Figure 4(b) is a circuit diagram of an arrangement in conformity with Figure 4(a) of simple form employing electrical signals of zero frequency and wear sensor conduction means having both sensor and return conductors,
Figure 4(c) is a circuit diagram of an arrangement similar to Figure 4(b) but employing wear sensor conduction means having no return conductor and conduction by way of the chassis,
Figure 5 is a schematic circuit diagram similar to Figure 4(a) but showing alternative forms of control means and conduction means,
Figure 6(a) is schematic circuit diagram similar to that of Figure 4(a) but including test means between the wear sensor conductor and signal receiver means,
Figure 6(b) is a circuit diagram similar to Figure 4(b) but showing the test means of Figure 5(a), and
Figure 7 is a sectional elevation through a portion of a brake shoe to which a friction lining is secured by way of a hollow rivet and the disposition of a second form of wear sensor therein.

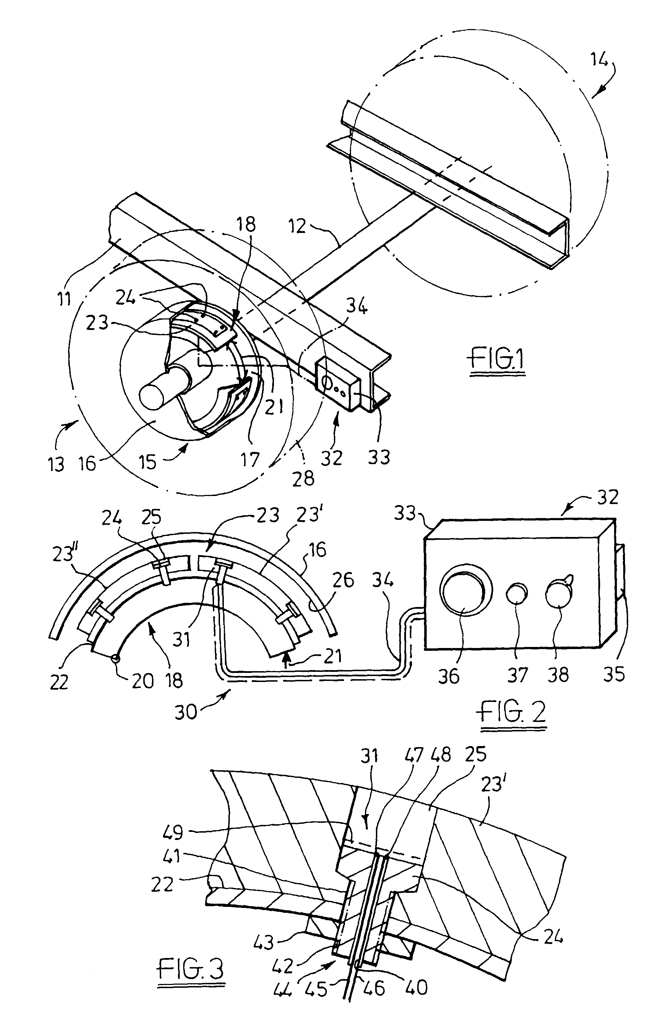

Referring to Figure 1, a vehicle 10 has a steel chassis 11 from which a suspended an axle 12 at the ends of which are located substantially identical wheel assemblies 13 and 14.

The wheel assembly 13 includes a brake arrangement, indicated generally at 15, comprising metal brake drum 16 rotatable with the axle and enclosing, with a stationary back plate 17 and, in well-known manner, shoes 18 or 19 which are pivoted about one end 20 and movable generally radially to and from contact with the drum by actuators 21.

Each brake shoe, say 18, comprises a platform 22 on which is carried a friction lining 23 secured to the platform by an array of rivets 24 or other like fastenings disposed or countersunk in through-holes 25 drilled in the lining during manufacture.

The friction linings are of course subject to wear by rubbing against the interior surface 26 of the drum, which therefore comprises a braking surface, when the brake is applied. A hole 27 is conventionally provided in the back plate 17 so that the extent of friction lining wear, that is, its remaining thickness above the level of the fastening rivets, can be determined by observation or insertion of a gauge through the back plate hole.

The brake arrangement 15 as described is conventional and consistent with physical inspection of friction lining wear; when appropriate, the drum 16 and a wheel 28 carried thereby are removed to expose the brake shoes which are in turn removed and relined by removing the old fastenings and securing a replacement lining with new ones.

Referring also to Figure 2, which shows part of the brake arrangement 15, in particular the shoe 18 and drum 16, the shoe is of a style conventional in commercial vehicles, the friction lining 23 being formed from a pair of half blocks 23', 23'' individually secured to the shoe platform 22.

In accordance with the present invention brake wear indicator apparatus is shown generally at 30. The apparatus comprises a wear sensor 31 carried by the brake shoe 18, a control unit 32 including a housing 33 mounted on the vehicle chassis in the vicinity of the axle and brake 15, and connecting conduction means 34 extending between the wear sensor and control unit.

The control unit 32 is self-contained, that is, independent of any other electrical systems of the vehicle. The unit housing 33 carries any convenient means, such as a magnet 35, for mounting it at a convenient location on the chassis where it is accessible and/or visible to a user performing inspection checks on the wheel and its brake. The mounting means is sufficiently robust that the housing remains mounted on the chassis whilst the vehicle is in normal use but preferably, is able to be moved and resited to a minor extent for the convenience of an individual inspector.

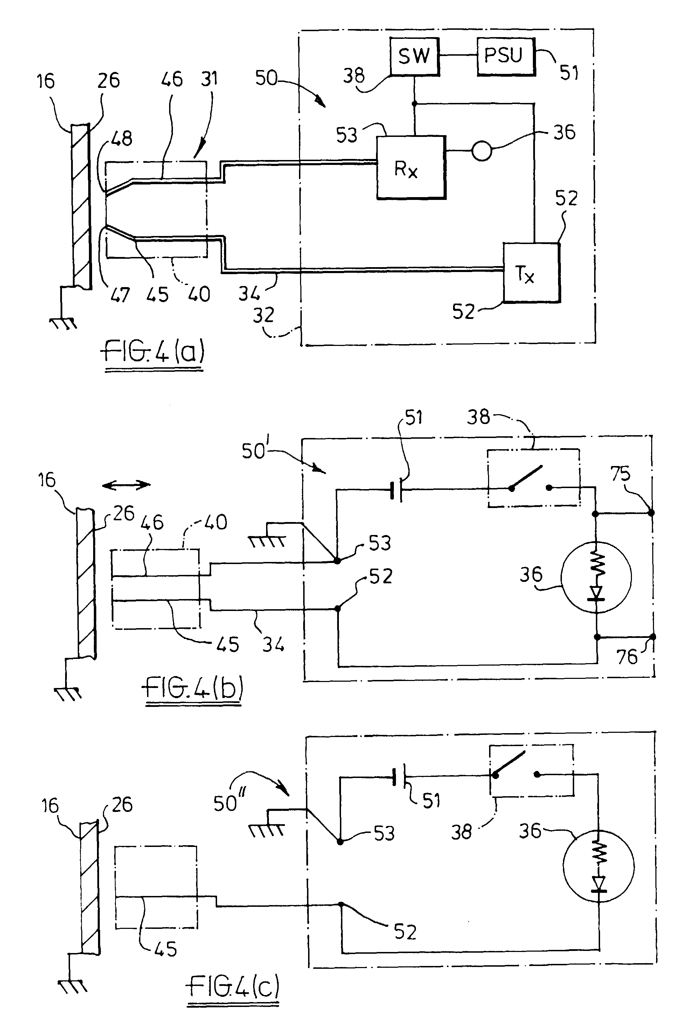

Because the control unit is mounted in an exposed location during normal vehicle operation, the housing 33 is sealed and/or waterproofed to prevent ingress of moisture or other debris and supporting minimal number of protected surface features, such as visual indicator 36, test switch 37 and optional power switch 38, all of which are associated control means circuit contained within the housing, and comprising an electrical circuit shown schematically at 50 in Figure 4(a) and described hereinafter.

The wear sensor 31, shown in greater detail in Figure 3, is disposed in a through-hole 25 in a friction lining block 23'. The wear sensor comprises an electrically insulating body 40 which is disposed to extend through a hollow fastener 24 securing the friction lining block 23' to the platform, the fastener having a shank part 41 extending through part of the friction lining and shoe platform and externally threaded at 42 to support a nut 43 by way of which the lining is clamped securely to the platform in concert with other fasteners, conventionally rivets, at other locations.

The body 40 contains sensor conduction means indicated generally at 44. The conduction means comprises a sensor conductor 45 and a return conductor 46 both of which extend along the through-hole in a direction substantially parallel to the wall surface of the lining surrounding the hole, that is, in the direction of lining thickness, for part only of the thickness that defines the minimum allowable thickness before lining replacement is required, each terminating at a conductor termination 47, 48 respectively. As the hole 25 above the conductor is usually open within the brake and liable to collect debris the sensor body preferably includes an abradable non-conductive cover 49 to protect the ends of the sensor conductor and return conductor. The sensor conduction means 44 is either connected to, or comprises a combination of, the connecting conduction means 34 extending to the control unit, all conductors externally of the body 40 being insulated.

Referring now to Figure 4(a), which illustrates the circuitry of the control means within the control unit 32 and wear sensor 31 in a form to assist in appreciating function, the control unit 32 includes within the housing an electrical circuit 50 connecting a power source 51, conveniently a battery, and the aforementioned optional power switch 38 and visual indicator 36.

The switch when closed provides power for signal transmission means 52 and receiver means 53, which receiver means controls operation of the indicator 36. The transmission means and receiver means are coupled to the wear sensor conductor 45 and return conductor 46 respectively by way of the connecting conduction means 34.

The transmission means 52 is operable to generate signals at a sensor frequency and couple them into the sensor conduction 45 which terminates at 47 in such a manner that the signals are prevented from coupling into return conductor 48 at termination 48. The receiver means 53 responds to signals at said sensor frequency to operate the indicator 36 and in the absence thereof, the indicator remains unoperated.

In use, with power switch 38 closed, signals are not coupled between conductor terminations 47 and 48 whilst the friction lining remains unworn and the braking surface 26 does not approach the sensor. However, as the brake friction lining wears with successive brake applications and the lining is worn away by contact with the drum braking surface, a point is reached where the braking surface abrades the lining sensor cover 49 and reaches a predetermined separation from the conductor terminations at which signals are coupled between them by way of the braking surface. At such time the signals are received by receiver 53 and indicator 36 is operated.

The circuit as thus far described is capable of operation with conduction means that comprises conventional conductors of electric current or conductors of optical radiation, that is, optical fibre conductors. Furthermore the signals employed may be at a sensor frequency which is chosen in accordance with the nature of the conductors and signal transmission therein and may extend down to zero frequency. In keeping with the objective of employing few, low cost component parts, the above described control means and wear sensor may be implemented in simple means using electrical conductors working at zero frequency, that is, with direct current.

Referring to Figure 4(b), in corresponding control means circuit 50', battery 51, power switch 38 and visual indicator 36 are all connected in series and transmission and receiver means 52 and 53 formed by circuit terminals to which the conductors of connection conduction means 34 are connected such that the sensor and return conductors also are connected in series, the circuit remaining incomplete by virtue of the gap between their terminations 47 and 48. Because of the open circuit, the sensor conduction means has a low conduction characteristic.

When, upon friction lining wear and braking, the braking surface abrades cover 49 and the terminations approach to a separation of zero, that is, it contacts and bridges them, effectively changing the conduction characteristics of the sensor conduction means as current flows by way of the sensor and return conductors to complete the circuit and operate the indicator. It will be appreciated that the circuit is completed and the indicator operated when, and only when, the brake is applied.

Thus, after such extent of lining wear occurs,when the vehicle is stationary and with the brakes applied, a mechanic making a visual inspection of wheel area is able to observe the state of the indicator and be informed that the lining has worn to the predetermined limit. To the extent that it is not a requirement to provide visual indication when the vehicle is being driven, and in accordance with prolonging battery life, it will be appreciated that there is no power consumption other than when the vehicle is braked or parked braked, notwithstanding the power switch 38 being permanently closed or omitted altogether. To increase the life of the battery and improve the perceptibility of the indicator, it may be formed from a light emitting diode of the type which flashes when energised. Furthermore, the circuit may include latching means (not shown) to continue the energisation of the indicator after the brake is released and the braking surface spaced from the sensor conductor.

Whereas it may be desirable to have the indicator display the situation automatically and remain in operation until the worn lining is replaced by omitting the power switch 38 or having it normally closed, if desired, the optional power switch 38 may be incorporated and normally open such that the visual indication is only given when an approved person responsible for the brake inspection closes this switch whilst making an inspection.

As mentioned above, the signals may be other than direct current at zero frequency; the battery 51 may be replaced by an a.c. or pulse source or, alternatively, each of the terminals 52 and 53 may comprise a transmission and receiver means of sinusoidal or pulse signals as illustrated in Figure 4(a), possibly with the transmission means and receiver mean being synchronised, such as a phase locked loop, to confine the response to signals only of the transmitted frequency irrespective of the accuracy with which the frequency itself is defined.

It will be appreciated that the brake drum carrying the braking surface is usually connected electrically to ground as provided by the chassis of the vehicle. If desired the circuitry within the control unit may be coupled to chassis ground at one of the terminals 52 or 53 if such coupling does not interfere with the provision of return signals to the receiver means. It will be appreciated further that if, as illustrated the terminal 53 associated with the return conductor is grounded, the conductor itself may be dispensed with if it is appropriate to receive return current by way of the chassis, as illustrated at 50'' in Figure 4(c) and for which no further description is required.

The arrangement and control means described operates on the principle of there being no communication of signals from the transmission means to the receiver means in the absence of the braking surface being approached to said predetermined distance by the sensor conductor termination.

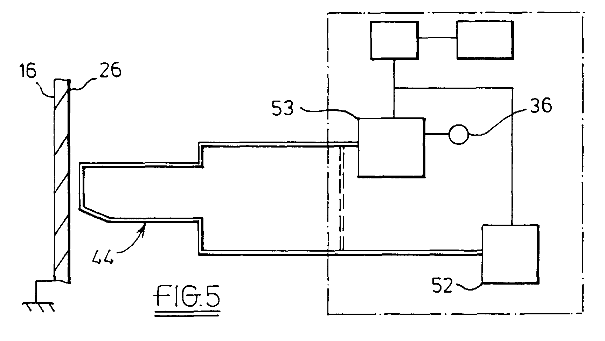

It will be appreciated by reference to Figure 5 that the signals at said sensor frequency may be returned from the sensor conductor (at or in the vicinity of the termination) or from the transmission means to the receiver means in normal circumstances such that the receiver means responds to the receipt by not operating the indicator. Contact between the braking surface and sensor conductor may either complete a high conduction path to ground for the duration of brake application or may permanently disrupt the signal return path, in either case depriving the receiver means of signals and causing it to operate the indicator.

It will be appreciated also that the arrangements shown generally in Figures 4(a) and 5 may employ forms of conduction means comprising other than conduction of electric current, except of course when such conduction to electrical ground by way of the braking surface is desired.

In some circumstances it may be essential to avoid having a system in which any electrical connection with the chassis exists or in which currents flow through the chassis. The conduction means may be arranged to employ conductors which conduct other than electric currents.

For instance, the conductors shown in Figures 4(a) and 5 may comprise optical fibres to conduct optical radiation, that is, electromagnetic radiation in the optical or near infra red part of the spectrum, the transmission and receiver means including transducers to effect coupling between electrical and optical signal forms.

Alternatively, an arrangement of the general form shown in Figure 5 may employ sensor conductor means in the form of a conductor of gaseous fluid which is closed at the termination adjacent the braking surface. Transmission means (which may be a manually operated pump) injects sensor signals into the conductor which has a poor conduction in terms of gas flow and thus contains elevated or reduced pressure. The receiver means is coupled to the conductor (or transmission means) and the pressure therein inhibits operation of the indicator. When the termination approaches the braking surface and is abraded thereby, a low conduction path is formed and the gas flows along the conductor, changing the pressure experienced by the receiver means which operates the indicator. The receiver means and indicator may comprise electrical circuitry or purely mechanical devices.

Notwithstanding the presence of large ferromagnetic bodies and possibly high levels of electrical and magnetic noise within the brake environment, the coupling conduction means and/or wear sensor may include inductive coupling of signals in place of physical coupling, so that the latter may, following relining of the shoe, require no further connection when installing the shoe within the brake. For example, the wear sensor may include a passive resonant circuit comprising capacitive and inductive elements and interconnecting conductors, some or all of which are disposed for circuit interruption or completion by the braking surface, whilst the coupling conduction means may terminate in a coil disposed within the brake housing, possibly by way of a grommet in the back plate. The control means, in respect of sensor signal transmission and reception, may comprise a resonant circuit, including said coil, and respond to changes in the resonance of the wear sensor if the resonant circuit thereof is suddenly disrupted, or alternatively completed, by the braking surface.

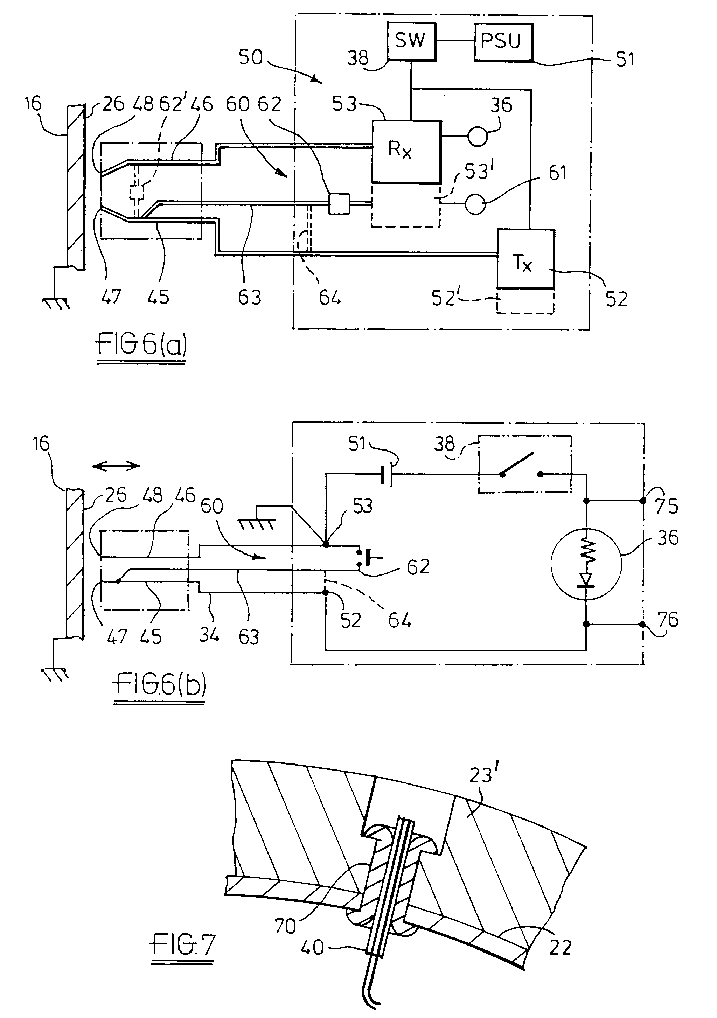

Clearly it is undesirable for a lack of visual indication to be interpreted wrongly as an absence of friction lining wear when there may be other faults, such as a failure of the power source or other component. To this end, test means may be incorporated as shown generally at 60 in Figure 6(a) which otherwise corresponds to Figure 4(a) and in Figure 6(b) which otherwise corresponds to Figure 4(b), like references being given to corresponding parts.

The test means comprises test transmission means 52' operable to couple electromagnetic signals (either electric current or optical radiation) of a test frequency to said sensor conductor 45, test receiver means 53' responsive to receive signals at said test frequency to cause operation of a test indicator 61 and a test coupling element 62 operable to couple signals drawn of the test frequency between the sensor conductor and test receiver means 53' independently of the braking surface 26.

Conveniently the test transmission means 52' comprises the transmission means 52 which is arranged to operate at both sensor and test frequencies. Similarly the test receiver means 53' comprises the receiver means 53 in responding to signals at both frequencies and corresponding individually to operate indicator of wear 36 and test indicator 61. Such transmission and receiver moving may be able in simple manner to provide and respond to signals of zero sensor frequency and a higher test frequency. Conveniently the coupling element 62 is contained within the control unit and coupled to the sensor conductor at, or close to, its termination 47 by conductor 63. If the sensor and test frequencies are different, the coupling element 62 may provide a permanent path for signals at the test frequency which are received and indicated the whole time that the circuit is in operation. The test frequency may be equal to the sensor frequency, for instance when at zero frequency or d.c., when the coupling element may comprise or include manually operated switching means to effect coupling and operate the test indicator to establish the presence of said signals at the sensor conductor 45.

It will be appreciated that where the test receiver means is provided by the receiver means 53, and the test frequency differs from the sensor frequency, the coupling element may be disposed as indicated at 62' fully within the wear sensor and signals at the test frequency returning by way of the return conductor 46, thereby ensuring a check on the integrity of the return conductor. Alternatively, if it is desired to contain the test means wholly within the control unit, the coupling element 62 may be coupled directly to the transmission means by link 64.

For example, in an arrangement employing conductors of electric current, a sensor frequency of zero (d.c.) may be employed for monitoring wear whereas a higher, test frequency a.c. or pulsed signal may be used for the test means, the signal at the test frequency being coupled by a capacitive coupling element to the receiver means (to operate test indicator 61) whilst the sensor (zero) frequency signal is not returned until the braking surface contacts the sensor conductor 45 and grounds it and/or bridges it with return conductor 46. Alternatively, in an arrangement employing conductors of optical radiation the sensor frequency may be above zero for the optimal transmission of optical signals by way of the reflective parts approached by the braking surface; the test frequency may be zero, the coupling element 62 or 62' comprising a radiation integrating body such that the receiver means normally detects radiation to indicate the circuit in functioning and conduction paths complete and upon which is superimposed higher frequency radiation, reflected by way of the braking surface between terminations 47 and 48 when brake wear causes the braking surface to approach to a predetermined separation. It will be appreciated that an integrating element may respond equal to test signals transmitted at the sensor frequency, that is, to the same signals employed by the sensor conductor, notwithstanding that upon such integration signals at the test, zero, frequency are formed and utilised.

The test means may be implemented in simple manner within the simplified circuits 50' and 50'' of Figures 4(b) and 4(c). Referring to Figure 6(b) the test means 60 comprise test transmission means common with the transmission means, that is, terminal 52 and test receiver means common with receiver means, that is, terminal 53. It further comprises conductor 63 connected to the sensor conductor 45 and test coupling means 62, in the form of a manually operated test switch 37, connecting the conductor 63 to terminal 53.

The test means uses as an indicator 61 the indicator 36. In operation, as described above, when the braking surface is at greater than zero separation from the conductors of the wear sensor, the circuit is incomplete and the indicator 36 not energised. To test that the circuit is functioning correctly the switch 62 is closed which completes the circuit and operates inductor 36. If the sensor, return and test conductors are all coupled to the control unit by a single plug and socket arrangement, then unintentional disconnection of the plug would show resale in a failure of the test. A simplification of the arrangement may be made by omitting the conductor 63 extending to the wear sensor and substituting link 64 to keep the test means wholly contained within the control unit.

Notwithstanding the various degrees of complexity that may be employed with respect to the control unit and conduction means employed, the overall arrangement is simple to dispose and operate as a retro-fit system to a vehicle and involves no special modifications to the vehicle or braking arrangement, other than the disposing of the wear sensor with respect to a lining conveniently as the lining is replaced with a substitute fastening element 41 in place of the usual rivet.

It will be appreciated that if the lining is secured by way of hollow rivets of a type known in the trade, and as illustrated at 70 in Figure 7, the wear sensor may be disposed with respect to the rivet by inserting it into the residual through-aperture in the clenched rivet.

It will be appreciated that various modifications may be made to the control means and/or wear sensor in respect of electrical operation. For instance, the indicator may be other than a visual indicator, such as an audible or tactile device. Similarly, whereas it has been described that receipt of any signal causes operation of an indicator device, such operation may comprise turning 'off' an indicator normally 'on' in the absence of such signals, or alternatively, it may be the absence of signals normally received which effect operations. It will also be appreciated that although the apparatus is intended for disposition with respect to the chassis to permit use at the time and site of a wheel and brake inspection, the control unit may include an output connection as illustrated by terminal pair 75, 76 in Figures 4(b) and 6(b) to facilitate the inclusion of a slave indicator device viewable remotely which indicates upon each brake application that a wear limit has been reached.

Furthermore, although the apparatus usefully comprises an open circuit before conduction in the wear sensor which is closed only when the brake is applied after a predetermined level of wear has occurred, the sensor may, as suggested above, be of the type in which the sensor conductor and return conductor are normally joined to each other by a link providing a closed circuit that is permanently broken when the link is abraded by the drum.

It will be appreciated that although there are operational advantages in having a control unit site proximate each wheel for which brake wear is to be monitored it is of course possible to have the connecting conduction means associated with a brake of that wheel extend to a control circuit housing at a remote site, closer to a different wheel with which it is also associated, but including means for providing a unique indication for each such brake.

Whereas in accordance with the present invention it is not of prime concern to provide indication when the vehicle is in operation and the brake not applied, it may be a preferred, or optional, mode when the aforementioned visual inspection is performed with the brake not applied, possibly if the axle is jacked up to test also rotation of the wheel.

Both sensor forms have the sensor conductor characteristics changed by the braking surface at the wear limit, either in the sense to effect an increase of effective conduction of a normally open-circuit conductor or to effect a decrease in the effective resistance of a normally short-circuit conductor. Clearly, more complex sensors and control unit circuits may be employed to respond to intermediate levels of change.

It will be appreciated also that the disposition and mounting of the wear sensor is open to variation. As the apparatus is particularly applicable to retro-fitting to existing vehicles whose components are not designed for wear monitoring, it is appropriate for the wear sensor to be mounted with respect to a brake shoe which has a conventional friction lining block or blocks mechanically secured to it without modification to the shoe platform or friction lining itself both of which are mass produced and interchangeable between vehicles.

The above described wear sensors have made use of the through-holes which exist for the purpose of securing the friction lining to a shoe platform and therefore is applicable also to so-called full length lining blocks, where a single larger friction lining is secured to a shoe platform. Alternatively, and particularly for a brake shoe which do have separate lining blocks as shown at 23', and 23'' in Figure 2, the wear sensor may be mounted with one or more conductors extending alongside the end walls of the blocks in the small gap separating them.

The apparatus is not confined to use with brakes in which friction linings are secured with respect to the shoe by mechanical fasteners and may be employed with bonded linings, even if this requires the provision of spacial mounting holes or mounting the sensor into the friction lining. Likewise mechanically fastened linings of the type described may be specially adapted and fitted with a wear sensor if desired instead of using the mounting holes or inter-block space.

Although the apparatus has been described with respect to drum brakes which are most common in commercial vehicles and difficult to monitor for wear, the apparatus could be used with disc-type brakes where it is appropriate to have a control unit giving an indication in the vicinity of a brake being inspected for wear.

## Claims

1. Brake wear indicator apparatus (30) for indicating wear in a friction lining (23, 23') of a brake (15), associated with a vehicle wheel (13, 14), which includes a metallic braking surface (26) against which the friction lining is caused to bear upon brake application, said apparatus comprising
a wear sensor (31) having sensor conduction means (44) carried by the brake with the lining and arranged to approach said braking surface to a predetermined separation therefrom upon both wear of the lining to a predetermined level of thickness and application of the brake to effect a change in conduction characteristics of the sensor conduction means,
a control unit (32) comprising an indicator (36) and control means (50, 50', 50") responsive to a change of conduction characteristics of trigger conduction means associated therewith to cause operation of the indicator (36), and
connecting conduction means (34) extending from the sensor conduction means (44) to said control unit (32) and connecting said sensor conduction means (44) to the control means (50, 50', 50") as the trigger conduction means therefor,
characterised in that the control unit (32) comprises,
a housing (33), carrying said indicator (36) and said control means (50, 50', 50") and a power source (51) for the arrangement, and
means (35) to mount the housing (33) on the vehicle chassis (11) in the vicinity of said wheel (13) having said brake.

2. Apparatus as claimed in claim 1 characterised in that the sensor conduction means (46) comprises a sensor conductor (45) terminating at a sensor conductor termination (47) adjacent the braking surface (16), the control means (50, 50', 50") includes transmission means (52) operable to couple signals of a sensor frequency to the sensor conduction means and receiver means (53) responsive to a change in received level thereof to cause operation of the indicator (36), and the braking surface (16) is arranged, at said predetermined separation from the sensor conductor termination, to effect a change in signal flow between the transmission and receiver means to effect said change in received level of said signals.

3. Apparatus as claimed in claim 2 characterised by test means (60) comprising test transmission means (51', 52) operable to couple signals of a test frequency to said sensor conductor (45), test receiver means (53', 53) responsive to received signals at said test frequency, a test indicator (61, 36) operable in response to a change in reception of signals at the test frequency by the receiver means, and a test coupling (62, 62', 63, 64) element operable to couple the signals of said test frequency between the sensor conductor and the test receiver means independently of the braking surface to effect operation of the test indicator.

4. Apparatus as claimed in claim 3 characterised in that the sensor conduction means further comprises a return conductor (46) terminating at a sensor conductor termination (48) adjacent the braking surface and connected to said receiving means (53), said braking surface at said predetermined separation coupling said signals at the sensor frequency between the terminations of the sensor and return conductors, and the test coupling element (62') is arranged to couple the signals of said test frequency to the test receiver means by way of the return conductor.

5. Apparatus as claimed in any one of claims 2 to 4 characterised in that the sensor frequency is zero.

6. Apparatus as claimed in any one of claims 3 to 5 characterised in that the test frequency is the same as the sensor frequency.

7. Apparatus as claimed in any one of claims 3 to 6 characterised in that the transmission means and test transmission means are common and said receiver means and test receiver means are common.

8. Apparatus as claimed in any one of claims 3 to 7 characterised in that the test coupling element includes manual switching means (37).

9. Apparatus as claimed in any one of the preceding claims characterised in that each conduction means (45, 46, 63) comprises one or more conductors of electrical current and arranged such that said change in conduction characteristics comprises conduction of electrical current by way of the braking surface.

10. Apparatus as claimed in any one of claims 8 or 9 when dependant on claim 7 characterised in that the circuit comprises in series an electrical power source (51), said indicator (36) and first and second terminals (52, 53), and in which the transmission means comprises said first terminal and the receiver means comprises said second terminal.

11. Apparatus as claimed in any one of the preceding claims characterised in that the means (35) to mount the control unit an the chassis comprises a magnet.

12. A method of determining wear of a brake friction lining (23, 23') associated with a wheel (13, 14) of a vehicle to a predetermined allowable limit of lining thickness, comprising
disposing with respect to a said friction lining and a rotatable metal braking surface (16) against which the lining is caused to bear by brake application, a wear sensor (31) having sensor conduction means (44) arranged to approach said braking surface to a predetermined separation therefrom upon both wear of the lining to said limit and application of the brake to effect a change in conduction characteristics of the sensor conduction means,
disposing attached to the vehicle (10) a control unit (32) containing an indicator (36) and control means (50, 50', 50") arranged to operate the indicator in response to predetermined signal conduction characteristics of trigger conduction means connected thereto, and
coupling said sensor conduction means of the wear sensor to said control means such that the sensor conduction means comprises said trigger conduction means and the wear sensor and control unit are disposed and coupled (34) during normal vehicle operation
and characterised by
disposing said control unit (32) attached to the vehicle chassis (11) in a housing (33) containing said control means, indicator and a power supply (51) therefor, in the vicinity of the wheel (13) having said brake
and with the vehicle stationary, examining the indicator in the housing for an indication that the conduction characteristics of the sensor conduction means has changed due to said allowable limit of wear of the friction lining.

13. A method as claimed in claim 12 characterised by disposing said control unit (32) attached to the vehicle chassis (11) in the vicinity of the wheel and, with the vehicle stationary, examining the indicator from a position adjacent the wheel whose brake friction lining wear is being determined.

14. A method as claimed in claim 12 or claim 13 characterised by disposing the control unit attached to the vehicle chassis by magnetic means (35).

15. A method as claimed in any one of claims 12 to 15 characterised by manually operating a control (38) on the housing to effect operation of the control means and/or the indicator.

16. A method as claimed in any one of claims 12 to 15 characterised by coupling signals at sensor and test frequencies into the sensor conduction means (44) from the control unit (50), detecting the reception at the control unit of signals at the test frequency, to indicate the correct functioning of the control unit and wear sensor, and detecting the reception at the control unit of signals at the sensor frequency to indicate that the conduction characteristics of the sensor conduction means has been changed by said braking surface at said predetermined separation.

17. A method as claimed in claim 16 when dependant on claim 15 characterised by manually operating test coupling means (37) on the housing to effect detection of signals at the test frequency and indicative of the correct functioning of the control unit prior to manually operating said control.

## Patentansprüche

1. Bremsenverschleiß-Anzeigevorrichtung (30) zum Anzeigen des Verschleißes eines Reibbelags (23, 23') einer Bremse (15), welche einem Kraftfahrzeugrad (13, 14) zugeordnet ist, welche eine metallische Bremsoberfläche (26) beinhaltet, gegen welche der Reibbelag bei einer Bremsenbetätigung in Anlage bringbar ist, wobei die Vorrichtung umfaßt
einen Verschleißsensor (31), welcher Sensorleitungs- bzw. -übertragungsmittel (44) aufweist, welcher durch die Bremse mit dem Belag getragen ist und angeordnet ist, um sich der Bremsoberfläche bis zu einem vorbestimmten Abstand von dieser sowohl bei einem Verschleiß des Belags bis zu einem vorbestimmten Ausmaß der Dicke als auch bei einer Betätigung der Bremse anzunähern, um eine Änderung in den Leitungs- bzw. Übertragungsmerkmalen der Sensorleitungsmittel zu bewirken,
eine Steuer- bzw. Regeleinheit (32), welche eine Anzeige (36) und Regel- bzw. Steuermittel (50, 50', 50") umfaßt, welche auf eine Änderung der Leitungsmerkmale von Auslöse- bzw. Triggerleitungsmitteln ansprechen, welche diesen zugeordnet sind, um einen Betrieb der Anzeige (36) zu bewirken, und
Verbindungsleitungsmittel (34), welche sich von den Sensorleitungsmitteln (44) zu der Regel- bzw. Steuereinheit (32) erstrecken und die Sensorleitungsmittel (44) mit den Regel- bzw. Steuermitteln (50, 50', 50") als die Triggerleitungsmittel hiefür verbinden,
dadurch gekennzeichnet, daß die Regel- bzw. Steuereinheit (32)
ein Gehäuse (33), welches die Anzeige (36) und die Regel- bzw. Steuermittel (50, 50', 50") und eine Versorgungsquelle (51) für die Anordnung enthält, und
Mittel (35) zur Festlegung des Gehäuses (33) an dem Kraftfahrzeugfahrwerk (11) in der Nähe des die Bremse aufweisenden Rades (13) umfaßt.

2. Vorrichtung nach Anspruch 1, dadurch gekennzeichnet, daß die Sensorleitungsmittel (46) einen Sensorleiter (45) umfassen, welcher an einem Sensorleiterende (47) nahe der Bremsoberfläche (16) endet, daß die Regel- bzw. Steuermittel (50, 50', 50") Übertragungsmittel (52) beinhalten, welche betreibbar sind, um Signale einer Sensorfrequenz mit den Sensorleitungsmitteln und Empfangsmitteln (53) zu koppeln, welche auf eine Änderung in dem empfangenen Niveau derselben ansprechen, um einen Betrieb der Anzeige (36) zu bewirken, und daß die Bremsoberfläche (16) in dem vorbestimmten Abstand von dem Sensorleiterende angeordnet ist, um eine Änderung in einem Signalfluß zwischen den Übertragungs- und Empfangsmitteln zu bewirken, um die Änderung in dem empfangenen Niveau der Signale zu bewirken.

3. Vorrichtung nach Anspruch 2, gekennzeichnet durch Testmittel (60), welche Testübertragungsmittel (52', 52), welche betreibbar sind, um Signale einer Testfrequenz mit dem Sensorleiter (45) zu koppeln, Testempfangsmittel (53', 53), welche auf empfangene Signale bei der Testfrequenz ansprechen, eine Testanzeige (61, 36), welche als Antwort auf eine Änderung beim Empfang von Signalen bei der Testfrequenz durch die Empfangsmittel betreibbar sind, und ein Testkopplungselement (62, 62', 63, 64) umfassen, welches betreibbar ist, um die Signale der Testfrequenz zwischen dem Sensorleiter und den Testempfangsmitteln unabhängig von der Bremsoberfläche zu koppeln, um den Betrieb der Testanzeige zu bewirken.

4. Vorrichtung nach Anspruch 3, dadurch gekennzeichnet, daß die Sensorleitungsmittel weiters eine Rückleitung (46) umfassen, welche an einem Sensorleiterende (48) nahe der Bremsoberfläche endet und mit den Empfangsmitteln (53) verbunden ist, wobei die Bremsoberfläche bei dem vorbestimmten Abstand Signale der Sensorfrequenz zwischen den Enden des Sensors und der Rückleitung koppelt und daß das Testkopplungselement (62') angeordnet ist, um die Signale der Testfrequenz mit den Testempfangsmitteln mit Hilfe der Rückleitung zu koppeln.

5. Vorrichtung nach einem der Ansprüche 2 bis 4, dadurch gekennzeichnet, daß die Sensorfrequenz null ist.

6. Vorrichtung nach einem der Ansprüche 3 bis 5, dadurch gekennzeichnet, daß die Testfrequenz dieselbe wie die Sensorfrequenz ist.

7. Vorrichtung nach einem der Ansprüche 3 bis 6, dadurch gekennzeichnet, daß die Übertragungsmittel und die Testübertragungsmittel gemeinsam ausgebildet sind und daß die Empfangsmittel und die Testempfangsmittel gemeinsam ausgebildet sind.

8. Vorrichtung nach einem der Ansprüche 3 bis 7, dadurch gekennzeichnet, daß das Testkopplungselement Handumschaltmittel (37) beinhaltet.

9. Vorrichtung nach einem der vorangehenden Ansprüche, dadurch gekennzeichnet, daß jedes Leitungsmittel (45, 46, 63) einen oder mehrere Leiter für elektrischen Strom umfaßt und derart angeordnet ist, daß die Änderung in den Leitungsmerkmalen die Leitung bzw. Leitfähigkeit von elektrischem Strom durch die Bremsoberfläche umfaßt.

10. Vorrichtung nach einem der Ansprüche 8 oder 9 in Abhängigkeit von Anspruch 7, dadurch gekennzeichnet, daß die Schaltung in Serie eine elektrische Strom- bzw. Leistungsquelle (51), die Anzeige (36) und erste und zweite Enden bzw. Anschlüsse (52, 53) umfaßt, und von welchen die Übertragungsmittel den ersten Anschluß und die Empfangsmittel den zweiten Anschluß umfassen.

11. Vorrichtung nach einem der vorangehenden Ansprüche, dadurch gekennzeichnet, daß die Mittel (35) zur Festlegung der Regel- bzw. Steuereinheit an dem Fahrwerk einen Magneten umfassen.

12. Verfahren zur Bestimmung des Verschleißes eines Bremsreibbelags (23, 23'), welcher einem Rad (13, 14) eines Kraftfahrzeugs zugeordnet ist, bis zu einem vorbestimmten, zulässigen Ausmaß der Belagdicke, umfassend ein Anordnen eines Verschleißsensors (31) relativ zu einem derartigen Reibbelag und einer rotierenden, metallischen Bremsoberfläche (16), an welche der Belag während des Bremsvorgangs in Anlage gebracht wird, welcher Sensor Sensorleitungsmittel (44) beinhaltet, welche angeordnet sind, um sich der Bremsoberfläche bis zu einem vorbestimmten Abstand von diesem sowohl bei Verschleiß des Belags bis zu dieser Grenze als auch bei Anwendung der Bremse anzunähern, um eine Änderung der Leitungsmerkmale der Sensorleitungsmittel zu bewirken,
ein Anordnen an dem Kraftfahrzeug (10) einer Steuer- bzw. Regeleinheit (32), welche eine Anzeige (36) und Regel- bzw. Steuermittel (50, 50', 50") beinhaltet, welche angeordnet werden, um die Anzeige in Abhängigkeit von vorbestimmten Signalleitungsmerkmalen von damit verbundenen Auslöse- bzw. Triggerleitungsmitteln zu betreiben, und
ein Koppeln der Sensorleitungsmittel des Verschleißsensors mit den Regel- bzw. Steuermitteln, sodaß die Sensorleitungsmittel die Triggerleitungsmittel umfassen und daß der Verschleißsensor und die Regel- bzw. Steuereinheit während des normalen Fahrzeugbetriebs angeordnet und gekoppelt (34) sind,
gekennzeichnet durch
ein Anordnen der Regel- bzw. Steuereinheit (32), welche an dem Kraftfahrzeugfahrwerk (11) festgelegt wird, in einem Gehäuse (33), welches die Regel- bzw. Steuermittel, die Anzeige und eine Stromversorgung (51) hiefür beinhaltet, in der Nähe des die Bremse aufweisenden Rades (13),
und bei stehendem Fahrzeug ein Überprüfen der Anzeige in dem Gehäuse für eine Anzeige, daß die Leitungsmerkmale der Sensorleitungsmittel sich aufgrund der zulässigen Grenze des Verschleißes des Reibbelags geändert haben.

13. Verfahren nach Anspruch 12, gekennzeichnet durch ein Anordnen der Regel- bzw. Steuereinheit (32), welche an dem Kraftfahrzeugfahrwerk (11) festgelegt wird, in der Nähe des Rades und bei stehendem Fahrzeug ein Überprüfen der Anzeige von einer Position benachbart dem Rad, dessen Bremsreibbelagverschleiß bestimmt wird.

14. Verfahren nach Anspruch 12 oder 13, gekennzeichnet durch ein Anordnen der an dem Kraftfahrzeugfahrwerk festgelegten Regel- bzw. Steuereinheit durch magnetische Mittel bzw. Einrichtungen (35).

15. Verfahren nach einem der Ansprüche 12 bis 14, gekennzeichnet durch ein manuelles Betätigen einer Steuerung bzw. Regelung (38) an dem Gehäuse, um einen Betrieb der Regel- bzw. Steuermittel und/oder der Anzeige zu bewirken.

16. Verfahren nach einem der Ansprüche 12 bis 15, gekennzeichnet durch ein Koppeln von Signalen bei Sensor- und Testfrequenzen in den Sensorleitungsmitteln (44) von der Regel- bzw. Steuereinheit (50), ein Detektieren des Empfangs bei der Regel- bzw. Steuereinheit von Signalen bei der Testfrequenz, um eine korrekte Funktionsweise der Regel- bzw. Steuereinheit und des Verschleißsensors anzuzeigen, und ein Detektieren des Empfangs bei der Regel- bzw. Steuereinheit von Signalen bei der Sensorfrequenz, um anzuzeigen, daß die Leitungsmerkmale der Sensorleitungsmittel durch die Bremsoberfläche bei dem vorbestimmten Abstand sich geändert haben.

17. Verfahren nach Anspruch 16 in Abhängigkeit von Anspruch 15, gekennzeichnet durch ein manuelles Betätigen der Testkopplungsmittels (37) an dem Gehäuse, um eine Detektion von Signalen bei der Testfrequenz zu bewirken, und welche das korrekte Funktionieren der Regel- bzw. Steuereinheit vor einer manuellen Betätigung der Regelung bzw. Steuerung anzeigen.

## Revendications

1. Appareil (30) d'indication d'usure de frein destiné à indiquer une usure dans une garniture de friction (23, 23') d'un frein (15) associé à une roue de véhicule (13, 14), qui présente une surface métallique de freinage (26) contre laquelle la garniture de friction est amenée à porter lors du serrage du frein, ledit appareil comportant
un capteur (31) d'usure ayant un moyen (44) de conduction de capteur porté par le frein avec la garniture et agencé de façon à se rapprocher de ladite surface de freinage jusqu'à une distance prédéterminée de celle-ci sous l'effet à la fois de l'usure de la garniture jusqu'à un niveau prédéterminé d'épaisseur et du serrage du frein afin de provoquer une modification des caractéristiques de conduction du moyen de conduction du capteur,
une unité de commande (32) comportant un indicateur (36) et un moyen de commande (50, 50', 50'') qui, en réponse à une modification des caractéristiques de conduction du moyen de conduction de déclenchement qui lui est associé, provoque l'actionnement de l'indicateur (36), et
un moyen (34) de conduction de connexion s'étendant depuis le moyen (44) de conduction du capteur jusqu'à ladite unité de commande (32) et connectant ledit moyen (44) de conduction du capteur au moyen de commande (50, 50', 50") en tant que moyen de conduction de déclenchement pour celui-ci,
caractérisé en ce que l'unité de commande (32) comporte
un boîtier (33) portant ledit indicateur (36) et ledit moyen de commande (50, 50', 50'') et une source d'énergie (51) pour l'agencement, et
un moyen (35) pour le montage du boîtier (33) sur le châssis (11) du véhicule au voisinage de ladite roue (13) comportant ledit frein.

2. Appareil selon la revendication 1, caractérisé en ce que le moyen (46) de conduction du capteur comporte un conducteur (45) de capteur aboutissant à une terminaison (47) de conducteur de capteur adjacente à la surface de freinage (16), le moyen de commande (50, 50', 50") comprend un moyen d'émission (52) pouvant fonctionner de façon à appliquer par couplage des signaux d'une fréquence du capteur au moyen de conduction du capteur et un moyen récepteur (53) qui, en réponse à une variation du niveau qu'il reçoit, provoque l'actionnement de l'indicateur (36), et la surface de freinage (16) est agencée, à ladite distance prédéterminée de la terminaison du conducteur du capteur, de façon à provoquer une modification dans la circulation des signaux entre les moyens d'émission et récepteur afin de provoquer ladite variation du niveau reçu desdits signaux.

3. Appareil selon la revendication 2, caractérisé par un moyen de test (60) comportant un moyen (51', 52) d'émission de test pouvant fonctionner de façon à appliquer par couplage des signaux d'une fréquence de test audit conducteur (45) du capteur, un moyen récepteur de test (53', 53) sensible à des signaux reçus à ladite fréquence de test, un indicateur de test (61, 36) pouvant fonctionner en réponse à une modification dans la réception des signaux à la fréquence de test par le moyen récepteur, et un élément de couplage de test (62, 62', 63, 64) pouvant fonctionner de façon à coupler les signaux de ladite fréquence de test entre le conducteur du capteur et le moyen récepteur de test indépendamment de la surface de freinage pour provoquer la mise en action de l'indicateur de test.

4. Appareil selon la revendication 3, caractérisé en ce que le moyen de conduction du capteur comporte en outre un conducteur (46) de retour aboutissant à une terminaison (48) de conducteur de capteur adjacente à la surface de freinage et connecté audit moyen de réception (53), ladite surface de freinage à ladite distance prédéterminée appliquant par couplage lesdits signaux à la fréquence du capteur entre les terminaisons des conducteurs du capteur et de retour, et l'élément de couplage de test (62') est agencé de façon à appliquer par couplage les signaux de ladite fréquence de test au moyen récepteur de test à l'aide du conducteur de retour.

5. Appareil selon l'une quelconque des revendications 2 à 4, caractérisé en ce que la fréquence du capteur est nulle.

6. Appareil selon l'une quelconque des revendications 3 à 5, caractérisé en ce que la fréquence de test est identique à la fréquence du capteur.

7. Appareil selon l'une quelconque des revendications 3 à 6, caractérisé en ce que le moyen d'émission et le moyen d'émission de test sont communs et ledit moyen récepteur et ledit moyen récepteur de test sont communs.

8. Appareil selon l'une quelconque des revendications 3 à 7, caractérisé en ce que l'élément de couplage de test comprend un moyen de commutation manuelle (37).

9. Appareil selon l'une quelconque des revendications précédentes, caractérisé en ce que chaque moyen de conduction (45, 46, 63) comporte un ou plusieurs conducteurs du courant électrique et agencé de façon que ladite modification des caractéristiques de conduction comprenne une conduction du courant électrique par la surface de freinage.

10. Appareil selon l'une des revendications 8 ou 9 lorsqu'elle dépend de la revendication 7, caractérisé en ce que le circuit comporte en série une source d'énergie électrique (51), ledit indicateur (36) et des première et seconde bornes (52, 53), et dans lequel le moyen d'émission comporte ladite première borne et le moyen récepteur comporte ladite seconde borne.

11. Appareil selon l'une quelconque des revendications précédentes, caractérisé en ce que le moyen (35) pour le montage de l'unité de commande sur le châssis comprend un aimant.

12. Procédé de détermination de l'usure d'une garniture de friction de frein (23, 23') associée à une roue (13, 14) d'un véhicule à une limite admissible prédéterminée d'épaisseur de la garniture, comprenant les étapes dans lesquelles
on dispose, par rapport à une garniture de friction et une surface métallique tournante (16) de freinage contre laquelle la garniture est amenée à porter lors du serrage du frein, un capteur (31) d'usure ayant un moyen de conduction de capteur (44) agencé pour se rapprocher de ladite surface de freinage jusqu'à une distance prédéterminée de celle-ci sous l'effet à la fois d'une usure de la garniture jusqu'à ladite limite et du serrage du frein pour provoquer une modification des caractéristiques de conduction du moyen de conduction du capteur,
on dispose, reliée au véhicule (10), une unité de commande (32) contenant un indicateur (36) et un moyen de commande (50, 50', 50") agencé de façon à faire fonctionner l'indicateur en réponse à des caractéristiques de conduction prédéterminées de signaux du moyen de conduction de déclenchement qui lui est connecté, et
on couple ledit moyen de conduction du capteur d'usure audit moyen de commande afin que le moyen de conduction du capteur comprenne ledit moyen de conduction de déclenchement et que le capteur d'usure et l'unité de commande soient disposés et couplés (34) pendant le fonctionnement normal du véhicule,
et caractérisé par l'étape dans laquelle
on dispose ladite unité de commande (32), fixée au châssis (11) du véhicule, dans un boîtier (33) contenant ledit moyen de commande, l'indicateur et une alimentation en énergie (51) pour ceux-ci, au voisinage de la roue (13) ayant ledit frein,
et le véhicule étant immobile, on examine l'indicateur dans le boîtier pour déterminer s'il indique que les caractéristiques de conduction du moyen de conduction du capteur ont changé du fait de ladite limite admissible d'usure de la garniture de friction.

13. Procédé selon la revendication 12, caractérisé par le fait qu'on dispose ladite unité (32) de commande, fixée au châssis (11) du véhicule, au voisinage de la roue et, le véhicule étant immobile, on examine l'indicateur à partir d'une position adjacente à la roue dont l'usure de la garniture de friction du frein est en cours de détermination.

14. Procédé selon la revendication 12 ou la revendication 13, caractérisé par le fait qu'on dispose l'unité de commande fixée au châssis du véhicule par un moyen magnétique (35).

15. Procédé selon l'une quelconque des revendications 12 à 14, caractérisé par le fait qu'on manoeuvre manuellement une commande (38) sur le boîtier afin de faire fonctionner le moyen de commande et/ou l'indicateur.

16. Procédé selon l'une quelconque des revendications 12 à 15, caractérisé par le fait que des signaux aux fréquences du capteur et de test sont appliqués par couplage au moyen (44) de conduction du capteur à partir de l'unité de commande (50), qu'on détecte la réception, à l'unité de commande, de signaux à la fréquence de test pour indiquer le fonctionnement correct de l'unité de commande et du capteur d'usure, et qu'on détecte la réception, à l'unité de commande, de signaux à la fréquence du capteur pour indiquer que les caractéristiques de conduction du moyen de conduction du capteur ont été modifiées par ladite surface de freinage à ladite distance prédéterminée.

17. Procédé selon la revendication 16 lorsqu'elle dépend de la revendication 15, caractérisé par une manoeuvre manuelle du moyen (37) de couplage de test sur le boîtier pour effectuer une détection de signaux à la fréquence de test et indiquant le fonctionnement correct de l'unité de commande avant une manoeuvre manuelle de ladite commande.
